(19) Europäisches Patentamt / European Patent Office / Office européen des brevets

(11) **EP 3 984 330 B1**

(12) **EUROPEAN PATENT SPECIFICATION**

(45) Date of publication and mention of the grant of the patent:
**06.05.2026 Bulletin 2026/19**

(21) Application number: **19933957.3**

(22) Date of filing: **17.06.2019**

(51) International Patent Classification (IPC):
*H04W 88/18* (2009.01)     *H04W 24/08* (2009.01)
*H04L 47/28* (2022.01)     *H04W 28/02* (2009.01)
*H04W 76/12* (2018.01)     *H04W 76/32* (2018.01)

(52) Cooperative Patent Classification (CPC):
**H04W 24/08; H04W 28/0268;** H04L 47/28;
H04W 76/12; H04W 76/32

(86) International application number:
**PCT/CN2019/091593**

(87) International publication number:
**WO 2020/252642 (24.12.2020 Gazette 2020/52)**

(54) **PACKET DELAY BUDGET DETERMINATION FOR TSN TRAFFIC FORWARDING**

BESTIMMUNG EINES PAKETVERZÖGERUNGSBUDGETS FÜR TSN-VERKEHRSÜBERTRAGUNG

DÉTERMINATION DU TEMPS MAXIMUM DE RETARD DE PAQUET POUR L'ÉCOULEMENT DE TRAFIC TSN

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.04.2022 Bulletin 2022/16**

(73) Proprietor: **Nokia Solutions and Networks Oy 02610 Espoo (FI)**

(72) Inventors:
• **CHAO, Hua
  Shanghai 201206 (CN)**
• **WANG, He
  Shanghai 201206 (CN)**

(74) Representative: **Script Intellectual Property LLP
Suite J, Anchor House
School Close
Chandlers Ford
Eastleigh, Hampshire SO53 4DY (GB)**

(56) References cited:
• ERICSSON: "TSCAI arrival time analysis", vol. SA WG2, no. Reno, USA; 20190513 - 20190517, 7 May 2019 (2019-05-07), XP051735162, Retrieved from the Internet <URL:http://www.3gpp.org/ftp/ Meetings%5F3GPP%5FSYNC/SA2/Docs/S2% 2D1904935%2Ezip> [retrieved on 20190507]
• HUAWEI ET AL: "Updates on Solution #18", vol. SA WG2, no. West Palm Beach, USA; 20181126 - 20181130, 20 November 2018 (2018-11-20), XP051490408, Retrieved from the Internet <URL:http://www.3gpp.org/ftp/tsg%5Fsa/WG2% 5FArch/TSGS2%5F129BIS%5FWest%5FPalm% 5FBeach/Docs/S2%2D1812232%2Ezip> [retrieved on 20181120]
• NOKIA ET AL: "Introducing support for UE and UPF Residence Time for TSC Deterministic QoS", vol. SA WG2, no. Xian; 20190408 - 20190412, 29 May 2019 (2019-05-29), XP051750412, Retrieved from the Internet <URL:http://www.3gpp.org/ftp/Meetings% 5F3GPP%5FSYNC/SA/Docs/SP%2D190428% 2Ezip> [retrieved on 20190529]

**(Cont. next page)**

- HUAWEI ET AL: "Mapping 5GS Bridge Delay to delays of TSN", vol. SA WG2, no. Reno, US; 20190513 - 20190517, 7 May 2019 (2019-05-07), XP051735720, Retrieved from the Internet <URL:http://www.3gpp.org/ftp/Meetings%5F3GPP%5FSYNC/SA2/Docs/S2%2D1905522%2Ezip> [retrieved on 20190507]
- ANONYMOUS: "3rd Generation Partnership Project; Technical Specification Group Services and System Aspects; System Architecture for the 5G System; Stage 2 (Release 16)", 3GPP STANDARD; TECHNICAL SPECIFICATION; 3GPP TS 23.501, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V16.1.0, 11 June 2019 (2019-06-11), pages 1 - 368, XP051753956
- ANONYMOUS: "3rd Generation Partnership Project; Technical Specification Group Services and System Aspects; System Architecture for the 5G System; Stage 2 (Release 16)", 3GPP STANDARD; TECHNICAL SPECIFICATION; 3GPP TS 23.501, vol. SA WG2, no. V16.1.0, 11 June 2019 (2019-06-11), pages 1 - 368, XP051753956
- QUALCOMM INCORPORATED ET AL.: "Addressing Editor's notes on TSN", 3GPP TSG-SA2 MEETING #133 S2-1906754, 17 May 2019 (2019-05-17), XP051737919, DOI: 20200225103839A

## Description

### FIELD

The disclosure generally relates to the field of communications, and in particular, to determining packet delay budget (PDB) for time-sensitive networking (TSN) traffic forwarding.

### BACKGROUND

Mechanisms for time-sensitive (or deterministic) transmission of data over Ethernet networks have been defined for Time-Sensitive Networking (TSN) in Institute of Electrical and Electronics Engineers (IEEE) standards such as IEEE P802.1Qcc. A TSN end station may act as "Talkers" which is a source of a time-sensitive stream, or act as "Listeners" which is a destination station for the stream.

For the 3rd Generation Partnership Project (3GPP) Release 16 (Rel-16), the feasibility and industrial control use cases of TSN have been studied. It is agreed to extend the fifth generation (5G) System (5GS) by integrating the 5GS with TSN networks, for example, as defined in IEEE P802.1Qcc, to enable time sensitive communication (TSC). The 5GS may act as a TSN bridge and be integrated with an external TSN network. In order to meet the latency requirements of the TSN traffic, TSN resource reservation for the TSN traffic needs to consider the delay due to the 5GS acting as the TSN bridge.

Conventionally, in a full centralized model of a TSN network, a Central Network Controller (CNC) calculates the AccumulatedLatency by accumulating bridge delay (per port pair per traffic class) and propagation delay (per port) from each bridge. Then, the CNC configures TSN features in each bridge for resource reservation. When the 5GS acts as a TSN bridge, there is a need to determine the delay induced by the 5GS accurately. ERICSSON: "TSCAI arrival time analysis", 3GPP DRAFT, S2-1904935 discusses TSC assistance information as known in the art.
HUAWEI ET AL: "Updates on Solution #18", 3GPP DRAFT; S2-1812232 discusses QoS in relation to 3GPP and TSN networks as known in the art.
NOKIA ET AL: "Introducing support for UE and UPF Residence Time for TSC Deterministic QoS", 3GPP DRAFT, S2-1906753 discusses QoS in TSN networks as known in the art.
HUAWEI ET AL: "Mapping 5GS Bridge Delay to delays of TSN", 3GPP TS 23.501 discusses bridge delays in a TSN as known in the art.

### SUMMARY

The invention is defined by the independent claims. Optional features are given in the dependent claims.

### BRIEF DESCRIPTION OF THE DRAWINGS

Some example embodiments will now be described with reference to the accompanying drawings, where:

FIG. 1 illustrates example system architecture of integrating the 5GS with a TSN network;

FIG. 2 illustrates an example environment in which embodiments of the present disclosure can be implemented;

FIG. 3 illustrates example bridge delay according to some example embodiments of the present disclosure

FIG. 4 illustrates an example signaling flow between the UPF, the SMF and the gNB according to some example embodiments of the present disclosure;

FIG. 5 illustrates an example signaling flow between various network functions (NFs) according to some example embodiments of the present disclosure;

FIG. 6 illustrates a flowchart of an example method of determining residence time of a TSC QoS flow in the NW-TT according to some example embodiments of the present disclosure;

FIG. 7 illustrates a flowchart of an example method of determining PDB of a TSC QoS flow in a core network according to some example embodiments of the present disclosure;

FIG. 8 illustrates a flowchart of an example method of determining PDB of a TSC QoS flow in a core network according to some other example embodiments of the present

In a fifth aspect, there is provided an apparatus comprising means for performing the method according to the third or fourth aspect.

In a sixth aspect, there is provided a computer readable storage medium that stores a computer program thereon. The computer program, when executed by a processor of a device, causes the device to perform the method according to the third or fourth aspect.

It is to be understood that the summary section is not intended to identify key or essential features of embodiments of the present disclosure, nor is it intended to be used to limit the scope of the present disclosure. Other features of the present disclosure will become easily comprehensible through the following description.

## BRIEF DESCRIPTION OF THE DRAWINGS

Some example embodiments will now be described with reference to the accompanying drawings, where:

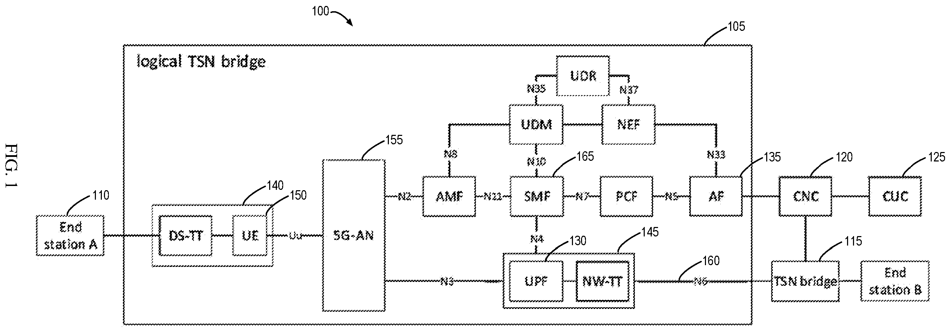

FIG. 1 illustrates example system architecture of integrating the 5GS with a TSN network;

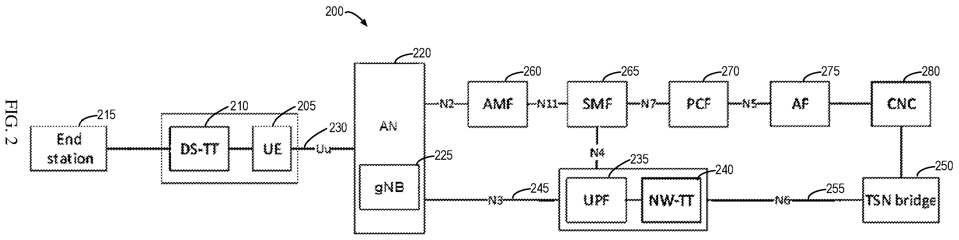

FIG. 2 illustrates an example environment in which embodiments of the present disclosure can be implemented;

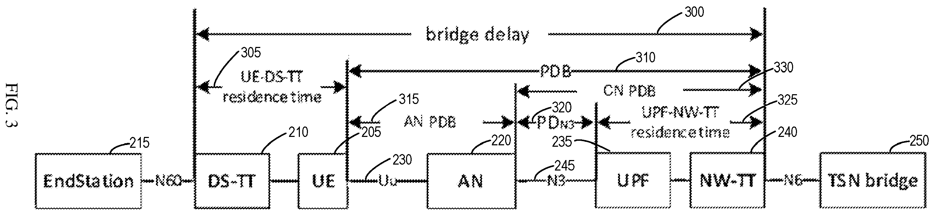

FIG. 3 illustrates example bridge delay according to some example embodiments of the present disclosure

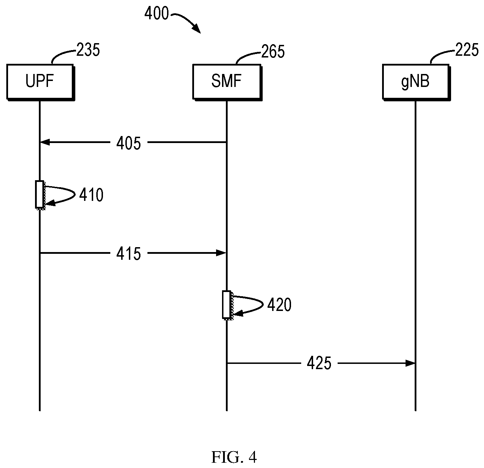

FIG. 4 illustrates an example signaling flow between the UPF, the SMF and the gNB according to some example embodiments of the present disclosure;

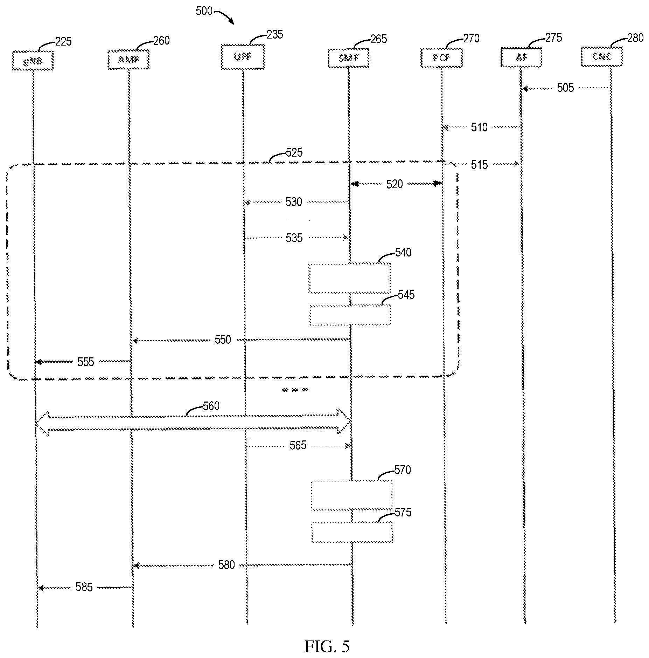

FIG. 5 illustrates an example signaling flow between various network functions (NFs) according to some example embodiments of the present disclosure;

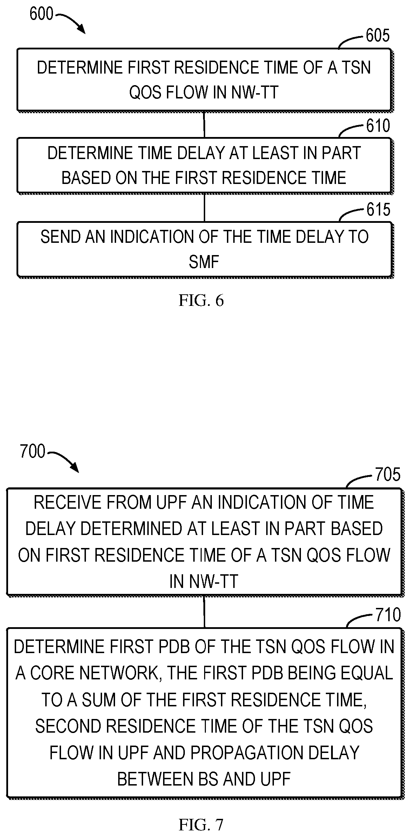

FIG. 6 illustrates a flowchart of an example method of determining residence time of a TSC QoS flow in the NW-TT according to some example embodiments of the present disclosure;

FIG. 7 illustrates a flowchart of an example method of determining PDB of a TSC QoS flow in a core network according to some example embodiments of the present disclosure;

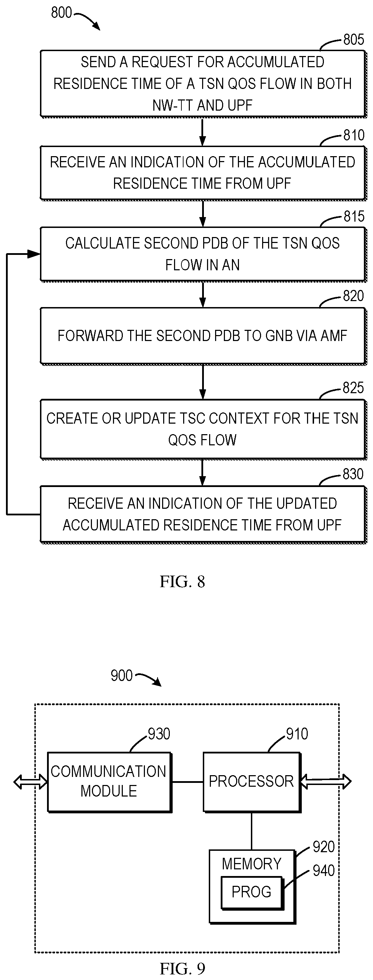

FIG. 8 illustrates a flowchart of an example method of determining PDB of a TSC QoS flow in a core network according to some other example embodiments of the present disclosure; and

FIG. 9 illustrates a simplified block diagram of a device that is suitable for implementing embodiments of the present disclosure.

Throughout the drawings, the same or similar reference numerals represent the same or similar element.

## DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. The disclosure described herein can be implemented in various manners other than the ones described below.

In the following description and claims, unless defined otherwise, all technical and scientific terms used herein have the same meaning as commonly understood by one of ordinary skills in the art to which this disclosure belongs.

As used herein, the term "base station" (BS) refers to a device via which user equipment (UE) can access the communication network. Examples of the base station include a relay, an access point (AP), a transmission point (TRP), a node B (NodeB or NB), an evolved NodeB (eNodeB or eNB), a New Radio (NR) NodeB (gNB), a Remote Radio Module (RRU), a radio header (RH), a remote radio head (RRH), a low power node such as a femto, a pico, and the like.

As used herein, the term "session management function" (SMF) refers to a device, functionality or component for managing a session in a core network. The SMF have various functions related to a session such as session establishment, session release, session modification and the like.

As used herein, the term "user plane function" (UPF) refers to a device, functionality or component for providing various functions in user plane in the core network. The UPF may provide interconnection, packet routing and forwarding and the like between mobile infrastructure and a data network.

As used herein, the term "user equipment" (UE) refers to a terminal device capable of wireless communications with each other with an end station of time-sensitive communication (TSC) or with the base station. The communications may involve transmitting and/or receiving wireless signals using electromagnetic signals, radio waves, infrared signals, and/or other types of signals suitable for conveying information over air. Examples of the UE include, but are not limited to, smart phones, wireless-enabled tablet computers, laptop-embedded equipment (LEE), laptop-mounted equipment (LME), and/or wireless customer-premises equipment (CPE).

As used herein, the term "end station" refers to an end device of time-sensitive networking (TSN). Examples of the end station may include a sensor, a meter, a UE and the like.

As used herein, the term "circuitry" may refer to one or more or all of the following:

(a) hardware-only circuit implementations (such as implementations in only analog and/or digital circuitry) and

(b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

As used herein, the singular forms "a", "an", and "the" are intended to include the plural forms as well, unless the context clearly indicates otherwise. The term "includes" and its variants are to be read as open terms that mean "includes, but is not limited to". The term "based on" is to be read as "based at least in part on". The term "one embodiment" and "an embodiment" are to be read as "at least one embodiment". The term "another embodiment" is to be read as "at least one other embodiment". Other definitions, explicit and implicit, may be included below.

As used herein, the terms "first", "second" and the like may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

It is agreed in 3GPP for the 5GS as a TSB bridge to be integrated with an external network. FIG. 1 shows example system architecture 100 of integrating the 5GS with a TSN network. As shown, the 5GS acts as a logical TSN bridge 105 between an end station A 110 and a TSN bridge 115.

There are three TSN configuration models defined in IEEE P802.1Qcc, among which, the fully centralized model is agreed in 3GPP Rel-6. A Central Network Controller (CNC) 120 and a Central User Controller (CUC) 125 as shown in FIG. 1 as well as two central controllers are defined in the fully centralized model. In this model, TSN resources reservation may be performed by the CNC 120 depending on TSN bridge capability reporting. Conventionally, the CNC 120 reads the bridge delay (per port pair per traffic class) and propagation delay (per port) from each bridge and calculates the AccumulatedLatency. Based on the knowledge of each bridge's capability and upon confirmation that there is a bridge path along which the TSN delay requirements can be met, the CNC 120 determines the bridges participating in the TSN frame forwarding. Then, the CNC 120 configures TSN features in each bridge for the resource reservation.

It is agreed that granularity of the logical TSN bridge 105 is per User Plane Function (UPF) 130. A bridge identity (ID) of the logical TSN bridge 105 may be bound to a UPF ID of the UPF 130 as identified in 3GPP TS 23.502, for example. An Application Function (AF) 135 for enabling TSN stores the binding relationship between a port on a side of a user equipment (UE)/Device-side TSN Translator (DS-TT) 140, a port on a side of a UPF/Network-side TSN Translator (NW-TT) 145, and a Protocol Data Unit (PDU) Session during reporting of logical TSN bridge information.

It is also agreed that 5GS bridge delay comprises both of UE/DS-TT residence time (or UE-DS-TT residence time) and packet delay budget (PDB). The UE-DS-TT residence time may be provided by UE (150) to the network side at the time of PDU session establishment. The PDB may be determined from 5G Quality of Service (QoS) Identifier (5QI) assigned for a TSC QoS flow, for example, based on standardized 5QI to QoS characteristics mapping. It is assumed that the PDB includes the UPF Residence Time and NW-TT Residence time. The AF 135 may calculate the 5GS independentDelayMax/ independentDelayMin value of a bridge for each port pair and for each traffic class using the UPF Residence Time, NW-TT Residence time and PDB.

However, the scheduling algorithm used by a New Radio (NR) NodeB (or gNB) in a radio interface may induce some uncertainty to the PDB. In order to forward a certain TSC QoS flow in the radio interface, the gNB may need to know PDB in the radio interface or in the 5G-AN 155, which is the upper bound of the packet delay.

In 3GPP, it has been defined that the delay budget that applies to the radio interface is determined from subtracting the delay between the UPF 130 terminating a N6 interface 160 and the 5G-AN 155 from a given PDB. For a certain delay critical Guaranteed Bit Rate (GBR) QoS flow, dynamic core network (CN) PDB is defined to maximize the remaining PDB available for a next generation Radio Access Network (NG-RAN) such as the 5G-AN 155. The dynamic CN PDB may be configured in the NG-RAN such as the 5G-AN 155. Alternatively, the dynamic CN PDB may be configured in a session management function (SMF) 165, and the gNB may obtain the dynamic CN PDB from the SMF 165. Then, the gNB may calculate the delay budget that is applied to the radio interface by itself upon receiving the dynamic CN PDB during a PDU session establishment procedure.

However, the inventor notices that the configuration of the dynamic CN PDB is not applicable to TSN forwarding via 5GS. For example, for TSN traffic, the CN PDB includes delay in the NW-TT in addition to the packet delay in the UPF. As all QoS flows for the same TSN traffic per port are conveyed through the same NW-TT in the same buffer, the NW-TT residence time is dependent on a TSN traffic class and a port of the NW-TT. The NW-TT residence time is related to a hardware processing rate of the NW-TT, a buffer size of the NW-TT and the number of QoS flows per TSN traffic class per port. The NW-TT residence time may be changed due to TSN traffic coming or leaving and cannot be pre-configured or pre-determined.

The inventor also notices that all the QoS flows for the same TSN traffic class via the same port may impact to each other. For example, incoming or leaving of a TSC QoS flow in the same TSN traffic class via a port may impact the NW-TT residence time of the on-going TSC QoS flows. Therefore, an updating procedure of the NW-TT residence time is also required for the TSC QoS flows although the UPF itself does not change. Such an updating procedure is not needed for conventional traffic where the delay budget applied to the radio interface only depends on QoS profile of the traffic and UPF.

Therefore, there is a need for determining the NW-TT residence time accurately and timely.

Embodiments of the present disclosure provide a mechanism for determining residence time of a TSC QoS flow in NW-TT so that the gNB can obtain the PDB in the radio interface or an access network (AN) for TSN forwarding. This mechanism proposes to divide the whole PDB for a TSC QoS flow into different components or parts. The residence time of the TSC QoS flow in the NW-TT (also referred to as NW-TT residence time of the TSC QoS flow) is determined by the UPF, for example, based on a hardware processing rate of the NW-TT, a buffer size of the NW-TT, QoS profile of the TSC QoS flow, and the number of TSC QoS flows in a TSN traffic class via a port. The NW-TT residence time is reported by the UPF to the SMF. The NW-TT residence time may be reported by the UPF in any suitable form. For example, the UPF may send the absolute or relative value of the NW-TT residence time to the SMF.

Accordingly, the SMF can collect or obtain the NW-TT residence time in real time. Based on the NW-TT residence time, the SMF can determine PDB of the TSC QoS flow in the CN (also referred to as CN PDB of the TSC QoS flow). As such, the gNB may derive a relatively accurate and real-time PDB of the TSC QoS flow in the AN (also referred to as AN PDB of the TSC QoS flow). Further, it is possible for the gNB to perform more appropriate scheduling for the TSC QoS flow to meet the corresponding latency requirement. Thus, the current 3GPP procedures and functionalities may be improved, and TSN resource reservation in 5GS is more reliable.

FIG. 2 shows an example environment 200 in which embodiments of the present disclosure can be implemented. The environment 200, which is a part of a communication network, comprises user equipment (UE) 205 and a device-side TSN translator (DS-TT) 210. The DS-TT 210 is connected with an end station 215 in a wired or wireless way. The UE 205 can communicate with the end station 215 via the DS-TT 210.

The environment 200 also comprises an access network (AN) 220 which includes a base station such as a gNB 225. The UE 205 can communicate with the gNB 225 in the AN 220 via a Uu interface 230. The communication between the UE 205 and the gNB 225 may follow any suitable wireless communication standards or protocols and employs any suitable communication technologies. The communication standards or protocols and technologies may include those that already exist or are to be developed in the future. The scope of the present disclosure will not be limited in this regard.

As shown, the environment 200 comprises a user plane function (UPF) 235 and a network-side TSN translator (NW-TT) 240. The gNB 225 in the AN 220 can communicate with the UPF 235 via an N3 interface 245 in a wired or wireless way. Further, the DW-TT 240 can communicate with a TSN bridge 250 via an N6 interface 255 in a wired or wireless way.

The environment 200 further comprises an access and mobility management function (AMF) 260, a session management function (SMF) 265, a policy control function (PCF) 270, an application function (AF) 275. a central network controller (CNC) 280. It is to be understood that the devices or functions are shown in FIG. 2 only for the purpose of illustration without suggesting any limitation to the scope of the present disclosure. The environment 200 may include any suitable other devices, functions or elements to enable the TSN bridging between the end station 215 and the TSN bridge 250 or to provide other services.

Through the TSN forwarding via the DS-TT 210, the UE 205, the AN 220, the UPF 230 and the NW-TT 240, a signal from the end station 215 can be transmitted to the TSN bridge 250. This forwarding may induce bridge delay as shown in FIG. 3.

FIG. 3 shows example bridge delay 300 according to some example embodiments of the present disclosure.

As shown, the bridge delay 300 includes residence time 305 in the DS-TT 210 and the UE 205 (also referred to as UE-DS-TT residence time 305) and PDB 310. In this example, the PDB 310 is divided into three parts, including, AN PDB 315 (represented by $PDB_{5G-AN}$), propagation delay 320 in N3 (represented by $PD_{N3}$) and residence time 325 in the UPF 235 and the NW-TT 240 (also referred to as UPF-NW-TT residence time 325).

The AN PDB 315 represents the PDB between the UE 205 and the AN 220 terminating the N3 interface 245. The propagation delay 320 may be normally a fixed value which is related to length of a cable between the AN 220 and the UPF 235. The propagation delay 320 and the UPF-NW-TT residence time 325 may form CN PDB 330 which represents the PDB in the CN.

In various example embodiments, the residence time in the NW-TT 240 (also referred to as NW-TT residence time) is determined by the UPF 235 and reported to the SMF 265 proactively or as a response to a request from the SMF 265.

FIG. 4 shows an example signaling flow 400 between the UPF 235, the SMF 265 and the gNB 225 according to some example embodiments of the present disclosure.

In the flow 400, the UPF 235 receives (405) from the SMF 265 a request for residence time (referred to as first residence time) of a TSC QoS flow in the NW-TT 240 (or the NW-TT residence time of the TSC QoS flow). The request may be received by the UPF 235 from the SMF 265 during an establishment procedure or a release procedure of the TSC QoS flow. The request may indicate QoS profile of the TSC QoS flow. The QoS profile may include a 5G Quality of Service (QoS) Identifier (5QI) and other QoS parameters. Accordingly, the UPF 235 can determine the first residence time based on the QoS profile.

In addition, the TSC QoS flow may be associated with a TSN traffic class and a port of the NW-TT 240. For example, the NW-TT 240 may have a plurality of ports to enable a plurality of TSN traffic classes. The TSC QoS flow may be forwarded in a specific TSN traffic class and forwarded via a specific port. In some example embodiments, the request from the SMF 265 may indicate the TSN traffic class and the port associated with the TSC QoS flow. As an example, the port may be indicated by a port ID, and the TSN traffic class may be indicated by the QoS profile. It is to be understood that other indications of the TSN traffic class and the port may be used. For example, the TSN traffic class may be explicitly indicated by an index or ID, and the port may be indicated in an implicit way.

In response to the request from the SMF 265, the UPF 235 determines (410) the first residence time of the TSC QoS flow in the NW-TT 240. It is to be understood that the request is optional. In some example embodiments, the UPF 230 may proactively update the NW-TT residence time for the TSC QoS flow without the request from the SMF 265.

The UPF 235 may determine the first residence time (or the NW-TT residence time) by considering any suitable factors. In the case that the request from the SMF 265 indicates the TSN traffic class, the port and the QoS profile associated with the TSC QoS flow, the UPF 235 may determine the first residence time for the indicated TSN traffic class and the indicated port based on the QoS profile. In some example embodiments, the UPF 235 may determine the first residence time based on a hardware processing rate of the NW-TT 240, a buffer size of the NW-TT 240, the QoS profile of the TSC QoS flow, and/or the number of TSC QoS flows in the TSN traffic class via the port associated with the TSC QoS flow.

After the first residence time is determined (410), the UPF 235 sends (415) an indication of time delay determined at least in part based on the first residence time to the SMF 265. In some example embodiments, the time delay is equal to a length of the first residence time. The indication of the time delay may be implemented in any suitable way. For example, the indication may indicate an absolute or relative value of the time delay.

In some example embodiments, in addition to the first residence time (or the NW-TT residence time), the UPF 235 may also determine residence time (referred to as second residence time) of the TSC QoS flow in the UPF 235 (or the UPF residence time of the TSC QoS flow) and report the second residence time to the SMF 265. The second residence time may be pre-configured and relatively fixed which is known to the UPF 235. Alternatively, the second residence time may be dynamically determined by the UPF 235 based on its capability.

The first and second residence time may be indicated by the UPF 235 to the SMF 265 separately or in combination. In some example embodiments, the UPF 235 may determine a sum of the first residence time (or the NW-TT residence time) and the second residence time (or the UPF residence time), which may be also referred to as UPF-NW-TT residence time. Further, the UPF 235 determines that the time delay is equal to a length of the sum of the first and second residence time to the SMF 265. For the purpose of discussion, in some example embodiments, the sum of the first and second residence time will also be referred to as accumulated residence time of the TSC QoS flow in both the NW-TT 240 and UPF 235.

After receiving the indication of the time delay from the UPF 235, the SMF 265 determines (420) PDB (referred to as first PDB) of the TSC QoS flow in a core network (CN) (such as the CN PDB 330 as shown in FIG. 3). The first packet delay budget is equal to a sum of the first and second residence time and the propagation delay, $PD_{N3}$, between the gNB 225 and the UPF 235. In some example embodiments, the UPF 235 may report the second residence time or the sum of the first and second residence time to the SMF 265, as discussed above. The propagation delay, $PD_{N3}$, may be pre-configured to a relatively fixed value which is known to the SMF 265. It is also possible that the SMF 265 determines the second residence time by itself if the second residence time is pre-configured and known to the SMF 265, for example.

Further, the SMF 265 may determine PDB (referred to as second PDB) of the TSC QoS flow in the AN 220 (such as the AN PDB 315 as shown in FIG. 3) by subtracting the first PDB from reference PDB for the TSC QoS flow. In some example embodiments, the reference PDB may be related to QoS profile of the TSC QoS flow. An indication of the reference PDB may be received by the SMF 264 from the PCF 270. Typically, the PCF 270 can determine various policy rules related to service offering, QoS levels or classes, charging and the like. For example, the SMF 265 may receive a 5G QoS identifier (5QI) assigned to the TSC QoS flow as the indication of the reference PDB from the PCF 270. Then, the SMF 265 may determine the reference PDB from the 5QI in accordance to 5QI to QoS characteristics mapping. The indication may be implemented in other forms. For example, the SMF 265 may receive an explicit indication of the reference PDB from the PCF 270. It is also possible that the SMF 265 obtain the reference PDB from other network functions (NFs). In some other example embodiments, the SMF 265 determines the reference PDB by itself based on the QoS profile of the TSC QoS flow in accordance to 5QI to QoS characteristics mapping.

In some example embodiments, the SMF 265 may create TSC context for the TSC QoS flow. The TSC context may include any suitable context information related to the TSC QoS flow. As an example, the TSC context may comprise a UE ID, a PDU session ID, a QoS Flow ID (QFI), the first PDB, the second PDB, and the like.

The SMF 265 then sends (425) the first PDB (for example, the CN PDB 330) or the second PDB (for example, the AN PDB 315) towards the gNB 225. Further, the gNB 225 may schedule the forwarding of the TSC QoS flow based on the second PDB. If the SMF 265 sends only the first PDB to the gNB 225, the gNB 225 may determine the second PDB by itself by subtracting the first PDB from the reference PDB for the TSC QoS flow, for example.

FIG. 5 shows an example signaling flow 500 between various network functions (NFs) according to some example embodiments of the present disclosure.

In the flow 500, the AF 275 receives (505) bridge configuration information from the CNC 280. The bridge configuration information may indicate a stream ID, a stream rank, a Medium Access Control (MAC) address of an end station, a port pair, TSN QoS and the like. With the information about the port pair and the TSN QoS, the AF 275 will trigger a resource reservation process.

As shown, the AF 275 sends (510) a QoS mapping request to the PCF 270. The request may carry a UE ID, a PDU session ID, a port pair ID and TSN QoS information. The PCF 270 then returns (515) a QoS mapping response carrying a UE ID, a PDU session ID and the like. Using the TSN QoS information, the PCF 270 may determine whether a new TSC QoS flow needs to be establishment. In this example, the PCF 270 triggers (520) a procedure 525 of PDU session modification by initiating a QoS flow establishment procedure for a TSC QoS flow which is an example implementation of a TSC QoS flow. A NW-TT port ID for the TSC QoS flow is sent by the PCF 270 to the SMF 265. The QoS flow may be indexed with a QFI.

The SMF 265 sends (530) to the UPF 235 a request for the first residence time in the NW-TT 240. The request contains a NW-TT port ID and 5GS QoS profile for indicating the associated TSN traffic class. The UPF 235 sends (535) to the SMF 265 a response to return the first residence time (and second residence time in the UPF 235) for the indicated traffic class of the indicated port. In some example embodiments, the UPF 235 may calculate all the accumulated residence time in both the NW-TT 240 and the UPF 235 (or UPF-NW-TT residence time) for all the NW-TT ports and send a list of the NW-TT port IDs and the UPF-NW-TT residence time to the SMF 265.

In this example, the SMF 265 determines (540) the second PDB in the AN 220 (or AN PDB) by subtracting the first PDB in the CN (or CN PDB) from the reference PDB as below:

$$PDB_{5G\text{-}AN} = PDB \quad - \quad RT_{UPF\text{-}NW\text{-}TT} - PD_{N3} \tag{1}$$

where $PDB_{5G\text{-}AN}$ represents the second PDB, PDB represents the reference PDB, $RT_{UPF\text{-}NW\text{-}TT}$ represents the accumulated reference time in both the NW-TT 240 and the UPF 235, and $PD_{N3}$ represents propagation delay via the N3 interface 245.

The SMF 265 creates (545) TSC context for the TSC QoS flow. During the TSC QoS establishment procedure, TSC context per TSC QoS flow may be created at both UE and network functions (NFs) such as the gNB 225, the SMF 265 and the AF 275. The NFs may update the TSC context during TSC QoS flow release procedure. The TSC context may contain any suitable information about the TSC QoS flow. Table 1 shows example information about the TSC context at UE and the NFs.

Table 1: TSC context

| UE | gNB | SMF/AMF | AF |
|---|---|---|---|
| UE ID, StreamID, StreamRank, End-Station MACAddress, UE ID, DS-TT port, PDU session ID, QFI | PDU session ID, QFI, 5G-AN PDB | UE ID, PDU session ID, QFI, 5G-AN PDB | StreamID, StreamRank, EndStation MACAddress, UE ID, Bridge ID, PDU session ID |

where StreamID represents an identification of a stream, StreamRank represents rank of a stream, EndStation MACaddress represents a MAC address of an end station, DS-TT port represents a port on the DS-TT side, and 5G-AN PDB represents PDB in 5G-AN.

The SMF 265 sends (550) the second PDB for the TSC QoS flow to the AMF 260 via a Namf_Communication_N1N2MessageTransfer message, for example. The AMF 260 sends (555) the second PDB to the gNB 225 via a N2 PDU session request message.

When a QoS flow is finished, a QoS flow release procedure is initiated (560) to trigger PDU session modification. When the UPF 235 detects that at least one QoS flow is finished, the UPF 235 may update the first residence time to the SMF 265 for one or more TSN traffic classes of one or more ports that are impacted by the finished QoS flow. As shown, the UPF 235 sends (565) residence time update to the SMF 265 which carries a list of NW-TT port IDs and the corresponding accumulated residence time (or UPF-NW-TT residence time). The SMF 265 updates (570) the second PDB in the AN 220 for the impacted QoS flow(s) and update (575) the associated TSC context as well. As an example, all the QoS flows via the same indicated ports and with the same TSN traffic classes as the released QoS flow may be impacted. The SMF 265 then sends (580) the updated second PDB to the AMF 260 via a Namf_Communication_N1N2MessageTransfer message, and the AMF 260 sends (585) the updated second PDB to the gNB 225 via a N2 PDU session request message.

FIG. 6 shows a flowchart of an example method 600 of determining the first residence time in the NW-TT 240 according to some example embodiments of the present disclosure. The method 600 can be implemented by the UPF 235 as shown in FIG. 2. For the purpose of discussion, the method 600 will be described with reference to FIG. 2.

At block 605, the UPF 235 determines the first residence time of a TSC QoS flow in the NW-TT 240. At block 610, the UPF 235 determines time delay at least in part based on the first residence time. At block 615, the UPF 235 sends an indication of the time delay to the SMF 265.

In some example embodiments, the TSC QoS flow is associated with a TSN traffic class and a port of the NW-TT 240. The first residence time may be determined by the UPF 235 based on at least one of: a hardware processing rate of the NW-TT 240, a buffer size of the NW-TT 240, QoS profile of the TSC QoS flow, and the number of TSC QoS flows in the TSN traffic class via the port.

In some example embodiments, the UPF 235 may receive a request for the first residence time from the SMF 265. The request may indicate the QoS profile of the TSC QoS flow and the port associated with the TSC QoS flow. In response to receiving the request, the UPF 235 determines the TSN traffic class from the QoS profile. Then, the UPF 235 determines the first residence time based on the TSN traffic class, the port and the QoS profile.

In some example embodiments, the request may be received by the UPF 235 from the SMF 265 during an establishment procedure or a release procedure for the TSC QoS flow.

In some example embodiments, the UPF 235 may determine the second residence time of the TSC QoS flow in the UPF 235. The UPF 235 then determines that the time delay is equal to a length of a sum of the first and second residence time.

FIG. 7 shows a flowchart of an example method 700 of determining the first PDB in the CN according to some example embodiments of the present disclosure. The method 700 can be implemented by the SMF 265 as shown in FIG. 2. For the purpose of discussion, the method 700 will be described with reference to FIG. 2.

At block 705, the SMF 265 receives from the UPF 235 an indication of time delay determined at least in part based on first residence time of a TSC QoS flow in the NW-TT 240. The SMF 265 determines the first PDB of the TSC QoS flow in a core network. At block 710, the first PDB is equal to a sum of the first residence time, the second residence time and propagation delay between the gNB 225 and the UPF 235. In some example embodiments, the time delay is equal to a length of the first residence time or a sum of the first and second residence time.

In some example embodiments, the SMF 265 may determine the second PDB of the TSC QoS flow in the AN 220 by subtracting the first PDB from the reference PDB for the TSC QoS flow. An indication of the reference PDB may be received by the SMF 265 from the PCF 270. Then, the SMF 265 sends the second PDB towards the gNB 225.

In some example embodiments, the TSC QoS flow is associated with a TSN traffic class and a port of the NW-TT 240. The SMF 265 may send a request for the first residence time to the UPF 235. The request indicates QoS profile of the TSC QoS flow and the port and the QoS profile may indicate the TSN traffic class. The SMF 265 may receive an indication of the associated port from the PCF 270.

In some example embodiments, the request is sent by the SMF 265 to the UPF 235 during an establishment procedure or a release procedure for the TSC QoS flow. In some example embodiments, the SMF 265 may create TSC context for the TSC QoS flow.

FIG. 8 shows a flowchart of an example method 800 of determining the second PDB in the AN 220 according to some other example embodiments of the present disclosure. The method 800 is an example implementation of the method 700. For the purpose of discussion, the method 800 will be described with reference to FIG. 2.

At block 805, the SMF 265 sends a request for the accumulated reference time of a TSC QoS flow in both the NW-TT 240 and the UPF 235. At block 810, the SMF 265 receives an indication of the accumulated reference time from the UPF 235. The indication may be implemented in any suitable form. For example, the indication may indicate an absolute or relative value of the accumulated reference time. At block 815, the SMF 265 calculates the second PDB of the TSC QoS flow in the AN 220. At block 820, the SMF 265 forwards the second PDB to the gNB 225 via the AMF 260. At block 825, the SMF 265 creates or updates TSC context for the TSC QoS flow. At block 830, the SMF 265 receives an indication of the updated accumulated reference time from the UPF 235. The method 800 proceeds to block 815 where the SMF 265 calculates the second PDB again.

All operations and features as described above with reference to FIGS. 2-5 are likewise applicable to the methods 600-800 and have similar effects. For the purpose of simplification, the details will be omitted.

FIG. 9 is a simplified block diagram of a device 900 that is suitable for implementing embodiments of the present disclosure. The device 900 can be implemented at the UPF 235 or the SMF 265 as shown in FIG. 2.

As shown, the device 900 includes a processor 910, a memory 920 coupled to the processor 910, a communication module 930 coupled to the processor 910, and a communication interface (not shown) coupled to the communication module 930. The memory 920 stores at least a program 940. The communication module 930 is for bidirectional communications, for example, via multiple antennas. The communication interface may represent any interface that is necessary for communication.

The program 940 is assumed to include program instructions that, when executed by the associated processor 910, enable the device 900 to operate in accordance with the embodiments of the present disclosure, as discussed herein with reference to FIGS. 2-8. The embodiments herein may be implemented by computer software executable by the processor 910 of the device 900, or by hardware, or by a combination of software and hardware. The processor 910 may be configured to implement various embodiments of the present disclosure.

The memory 920 may be of any type suitable to the local technical network and may be implemented using any suitable data storage technology, such as a non-transitory computer readable storage medium, semiconductor based memory devices, magnetic memory devices and systems, optical memory devices and systems, fixed memory and removable memory, as non-limiting examples. While only one memory 920 is shown in the device 900, there may be several physically distinct memory modules in the device 900. The processor 910 may be of any type suitable to the local technical network, and may include one or more of general purpose computers, special purpose computers, microprocessors, digital signal processors (DSPs) and processors based on multicore processor architecture, as non-limiting examples. The device 900 may have multiple processors, such as an application specific integrated circuit chip that is slaved in time to a clock which synchronizes the main processor.

When the device 900 acts as the UPF 235 or a part of the UPF 235, the processor 910 and the communication module 930 may cooperate to implement the method 600 as described above with reference to FIG. 6. When the device 900 acts as the SMF 265 or a part of the SMF 265, the processor 910 and the communication module 930 may cooperate to implement the methods 700 and 800 as described above with reference to FIGS. 7 and 8. All operations and features as described above with reference to FIGS. 2-8 are likewise applicable to the device 900 and have similar effects. For the purpose of simplification, the details will be omitted.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target real or virtual processor, to carry out the methods 600-800 as described above with reference to FIGS. 2-8. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program codes or related data may be carried by any suitable carrier to enable the device, apparatus or processor to perform various processes and operations as described above. Examples of the carrier include a signal, computer readable media and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), Digital Versatile Disc (DVD), an optical storage device, a magnetic storage device, or any suitable combination of the foregoing.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

Various embodiments of the techniques have been described. In addition to or as an alternative to the above, the following examples are described. The features described in any of the following examples may be utilized with any of the other examples described herein.

In some aspects, a user plane function, comprising: at least one processor; and at least one memory including computer program code; the at least one memory and the computer program code configured to, with the at least one processor, cause the user plane function to: determine first residence time of a time-sensitive communication (TSC) QoS flow in a network-side TSN translator (NW-TT); determine time delay at least in part based on the first residence time; and send an indication of the time delay to a session management function.

In some example embodiments, the first residence time is determined based on at least one of: a hardware processing rate of the NW-TT, a buffer size of the NW-TT, Quality of Service (QoS) profile of the TSC QoS flow, and a number of TSC QoS flows in a TSN traffic class via a port of the NW-TT, the TSN traffic class and the port associated with the TSC QoS flow.

In some example embodiments, the user plane function is caused to determine the first residence time by: receiving a request for the first residence time from the session management function, the request indicating QoS profile of the TSC QoS flow and a port of the NW-TT associated with the TSC QoS flow; and in response to receiving the request, determining a TSN traffic class associated with the TSC QoS flow from the QoS profile; and determining the first residence time based on the TSN traffic class, the port and the QoS profile.

In some example embodiments, the request is received from the session management function during an establishment procedure or a release procedure for the TSC QoS flow.

In some example embodiments, the user plane function is caused to determine the time delay by: determining second residence time of the TSC QoS flow in the user plane function; and determining that the time delay is equal to a length of a sum of the first and second residence time.

In some aspects, a session management function, comprising: at least one processor; and at least one memory including computer program code; the at least one memory and the computer program code configured to, with the at least one processor, cause the session management function to: receive, from a user plane function, an indication of time delay determined at least in part based on first residence time of a time-sensitive communication (TSC) QoS flow in a network-side TSN translator (NW-TT); and determine first packet delay budget of the TSC QoS flow in a core network, the first packet delay budget being equal to a sum of the first residence time, second residence time of the TSC QoS flow in the user plane function and propagation delay between a base station and the user plane function.

In some example embodiments, the session management function is further caused to: determine second packet delay budget of the TSC QoS flow in an access network by subtracting the first packet delay budget from reference packet delay budget for the TSC QoS flow; and send the second packet delay budget towards the base station.

In some example embodiments, the session management function is further caused to: receive an indication of the reference packet delay budget from a policy control function.

In some example embodiments, the time delay is equal to a length of a sum of the first and second residence time.

In some example embodiments, the session management function is further caused to: send a request for the first residence time to the user plane function, the request indicating QoS profile of the TSC QoS flow and a port of the NW-TT associated with the TSC QoS flow, the QoS profile indicating a TSN traffic class associated with the TSC QoS flow.

In some example embodiments, the session management function is further caused to: receive an indication of the port from a policy control function.

In some example embodiments, the request is sent to the user plane function during an establishment procedure or a release procedure for the TSC QoS flow.

In some example embodiments, the session management function is further caused to: create or update time-sensitive communication (TSC) context for the TSC QoS flow.

In some aspects, a method comprises: determining, by a user plane function, first residence time of a time-sensitive communication (TSC) QoS flow in a network-side TSN translator (NW-TT); determining time delay at least in part based on the first residence time; and sending an indication of the time delay to a session management function.

In some example embodiments, the first residence time is determined based on at least one of: a hardware processing rate of the NW-TT, a buffer size of the NW-TT, Quality of Service (QoS) profile of the TSC QoS flow, and a number of TSC QoS flows in a TSN traffic class via a port of the NW-TT, the TSN traffic class and the port being associated with the TSC QoS flow.

In some example embodiments, determining the first residence time comprises: receiving a request for the first residence time from the session management function, the request indicating QoS profile of the TSC QoS flow and a port of the NW-TT associated with the TSC QoS flow; in response to receiving the request, determining a TSN traffic class associated with the TSC QoS flow from the QoS profile; and determining the first residence time based on the TSN traffic class, the port and the QoS profile.

In some example embodiments, the request is received from the session management function during an establishment procedure or a release procedure for the TSC QoS flow.

In some example embodiments, determining the time delay comprises: determining second residence time of the TSC QoS flow in the user plane function; and determining that the time delay is equal to a length of a sum of the first and second residence time.

In some aspects, a method comprises: receiving, by a session management function, from a user plane function, an indication of time delay determined at least in part based on first residence time of a time-sensitive communication (TSC) QoS flow in a network-side TSN translator (NW-TT); and determining first packet delay budget of the TSC QoS flow in a core network, the first packet delay budget being equal to a sum of the first residence time, second residence time of the TSC QoS flow in the user plane function and propagation delay between a base station and the user plane function.

In some example embodiments, the method further comprises: determining second packet delay budget of the TSC QoS flow in an access network by subtracting the first packet delay budget from reference packet delay budget for the TSC QoS flow; and sending the second packet delay budget towards the base station.

In some example embodiments, the method further comprises: receiving an indication of the reference packet delay budget from a policy control function.

In some example embodiments, the time delay is equal to a length of a sum of the first and second residence time.

In some example embodiments, the method further comprises: sending a request for the first residence time to the user plane function, the request indicating QoS profile of the TSC QoS flow and a port of the NW-TT associated with the TSC QoS flow, the QoS profile indicating a TSN traffic class associated with the TSC QoS flow.

In some example embodiments, the method further comprises: receiving an indication of the port from a policy control function.

In some example embodiments, the request is sent to the user plane function during an establishment procedure or a release procedure for the TSC QoS flow.

In some example embodiments, the method further comprises: creating or updating time-sensitive communication (TSC) context for the TSC QoS flow.

In some aspects, an apparatus comprises: means for determining, by a user plane function, first residence time of a time-sensitive communication (TSC) QoS flow in a network-side TSN translator (NW-TT); means for determining time delay at least in part based on the first residence time; and means for sending an indication of the time delay to a session management function.

In some example embodiments, the first residence time is determined based on at least one of: a hardware processing rate of the NW-TT, a buffer size of the NW-TT, Quality of Service (QoS) profile of the TSC QoS flow, and a number of TSC QoS flows in a TSN traffic class via a port of the NW-TT, the TSN traffic class and the port being associated with the TSC QoS flow.

In some example embodiments, the means for determining the first residence time comprises: means for receiving a request for the first residence time from the session management function, the request indicating QoS profile of the TSC QoS flow and a port of the NW-TT associated with the TSC QoS flow; means for in response to receiving the request, determining a TSN traffic class associated with the TSC QoS flow from the QoS profile; and means for determining the first residence time based on the TSN traffic class, the port and the QoS profile.

In some example embodiments, the request is received from the session management function during an establishment procedure or a release procedure for the TSC QoS flow.

In some example embodiments, the means for determining the time delay comprises: means for determining second residence time of the TSC QoS flow in the user plane function; and means for determining that the time delay is equal to a length of a sum of the first and second residence time.

In some aspects, an apparatus comprises: means for receiving, by a session management function, from a user plane function, an indication of time delay determined at least in part based on first residence time of a time-sensitive communication (TSC) QoS flow in a network-side TSN translator (NW-TT); and means for determining first packet delay budget of the TSC QoS flow in a core network, the first packet delay budget being equal to a sum of the first residence time, second residence time of the TSC QoS flow in the user plane function and propagation delay between a base station and the user plane function.

In some example embodiments, the apparatus further comprises: means for determining second packet delay budget of the TSC QoS flow in an access network by subtracting the first packet delay budget from reference packet delay budget for the TSC QoS flow; and means for sending the second packet delay budget towards the base station.

In some example embodiments, the apparatus further comprises: means for receiving an indication of the reference packet delay budget from a policy control function.

In some example embodiments, the time delay is equal to a length of a sum of the first and second residence time.

In some example embodiments, the apparatus further comprises: means for sending a request for the first residence time to the user plane function, the request indicating QoS profile of the TSC QoS flow and the port of the NW-TT associated with the TSC QoS flow, the QoS profile indicating a TSN traffic class associated with the TSC QoS flow.

In some example embodiments, the apparatus further comprises: means for receiving an indication of the port from a policy control function.

In some example embodiments, the request is sent to the user plane function during an establishment procedure or a release procedure for the TSC QoS flow.

In some example embodiments, the apparatus further comprises: means for creating or updating time-sensitive communication (TSC) context for the TSC QoS flow.

In some aspects, a computer readable storage medium comprises program instructions stored thereon, the instructions, when executed by a processor of a device, causing the device to perform the method according to some example embodiments of the present disclosure.

**Claims**

1. A system comprising:

   a user plane function (235), comprising:

      at least one processor (910); and
      at least one memory (920) including computer program code (940);
      the at least one memory (920) and the computer program code (940) configured to, with the at least one processor (910), cause the user plane function (235) to:

         determine first residence time of a time-sensitive communication, TSC, Quality of Service, QoS, flow in a network-side time-sensitive networking, TSN, translator, NW-TT;
         determine second residence time of the TSC QoS flow in the user plane function (235);
         determine time delay at least in part based on the first residence time and at least in part based on the second residence time, the time delay being equal to a length of a sum of the first residence time and second residence time; and
         send an indication of the time delay to a session management function (265); and

a session management function (265), comprising:

> at least one processor (910); and
> at least one memory (920) including computer program code (940);
> the at least one memory (920) and the computer program code (940) configured to, with the at least one processor (910), cause the session management function (265) to:
>
>> receive, from the user plane function (235), the indication of time delay; and
>> determine first packet delay budget of the TSC QoS flow in a core network, the first packet delay budget being equal to a sum of the first residence time, the second residence time of the TSC QoS flow in the user plane function (235) and propagation delay between a base station (225) and the user plane function (235).

2. The system of claim 1, wherein the first residence time is determined based on at least one of:

> a hardware processing rate of the NW-TT,
> a buffer size of the NW-TT,
> QoS profile of the TSC QoS flow, and
> a number of TSC QoS flows in a TSN traffic class via a port of the NW-TT, the TSN traffic class and the port being associated with the TSC QoS flow.

3. The system of claim 1, wherein the user plane function (235) is caused to determine the first residence time by:

> receiving a request for the first residence time from the session management function (265), the request indicating QoS profile of the TSC QoS flow and a port of the NW-TT associated with the TSC QoS flow;
> in response to receiving the request, determining a TSN traffic class associated with the TSC QoS flow from the QoS profile; and
> determining the first residence time based on the TSN traffic class, the port and the QoS profile.

4. The system of claim 3, wherein
the request is received from the session management function (265) during an establishment procedure or a release procedure for the TSC QoS flow.

5. The system of claim 1, wherein the session management function (265) is further caused to:

> determine second packet delay budget of the TSC QoS flow in an access network by subtracting the first packet delay budget from reference packet delay budget for the TSC QoS flow; and
> send the second packet delay budget towards the base station (225).

6. The system of claim 5, wherein the session management function (265) is further caused to:
receive an indication of the reference packet delay budget from a policy control function.

7. The system of claim 1, wherein the time delay is equal to a length of a sum of the first and second residence time.

8. The session management function (265) of claim 1, wherein the session management function (265) is further caused to:
send a request for the first residence time to the user plane function (235), the request indicating QoS profile of the TSC QoS flow and a port of the NW-TT associated with the TSC QoS flow, the QoS profile indicating a TSN traffic class associated with the TSC QoS flow.

9. The system of claim 8, wherein the session management function (265) is further caused to:
receive an indication of the port from a policy control function.

10. The system of claim 8, wherein
the request is sent to the user plane function (235) during an establishment procedure or a release procedure for the TSC QoS flow.

11. The system of claim 1, wherein the session management function (265) is further caused to:

create or update TSC context for the TSC QoS flow.

12. A method comprising:

determining, by a user plane function (235), first residence time of a time-sensitive communication, TSC, Quality of Service, QoS, flow in a network-side time-sensitive networking, TSN, translator, NW-TT;

determining, by the user plane function, second residence time of the TSC QoS flow in the user plane function (235);

determining, by the user plane function, time delay at least in part based on the first residence time and at least in part based on the second residence time, the time delay being equal to a length of a sum of the first residence time and second residence time;

sending, by the user plan function, an indication of the time delay to a session management function (265)

receiving, by a session management function (265), from the user plane function (235), the indication of time delay; and

determining, by the session management function, first packet delay budget of the TSC QoS flow in a core network, the first packet delay budget being equal to a sum of the first residence time, the second residence time of the TSC QoS flow in the user plane function (235) and propagation delay between a base station (225) and the user plane function (235).

**Patentansprüche**

1. Ein System, umfassend:
eine Benutzerebenenfunktion (235), umfassend:

mindestens einen Prozessor (910); und

mindestens einen Speicher (920), der Computerprogrammcode (940) enthält;

wobei der mindestens eine Speicher (920) und der Computerprogrammcode (940) so konfiguriert sind, dass sie zusammen mit dem mindestens einen Prozessor (910) die Benutzerebenenfunktion (235) veranlassen:

eine erste Aufenthaltsdauer eines zeitkritischen Kommunikations-, TSC-, Quality-of-Service-, QoS-, Flusses in einem netzseitigen zeitkritischen Netzwerk-, TSN-, Übersetzer, NW-TT, zu bestimmen;

eine zweite Aufenthaltsdauer des TSC-QoS-Flusses in der Benutzerebenenfunktion (235) zu bestimmen;

eine Zeitverzögerung zu bestimmen, die zumindest teilweise auf der ersten Aufenthaltsdauer und zumindest teilweise auf der zweiten Aufenthaltsdauer basiert, wobei die Zeitverzögerung gleich einer Länge einer Summe der ersten Aufenthaltsdauer und der zweiten Aufenthaltsdauer ist; und

eine Angabe der Zeitverzögerung an eine Sitzungsverwaltungsfunktion (265) zu senden; und

eine Sitzungsverwaltungsfunktion (265), umfassend:

mindestens einen Prozessor (910); und

mindestens einen Speicher (920), der Computerprogrammcode (940) enthält;

wobei der mindestens eine Speicher (920) und der Computerprogrammcode (940) so konfiguriert sind, dass sie zusammen mit dem mindestens einen Prozessor (910) die Sitzungsverwaltungsfunktion (265) veranlassen:

von der Benutzerebenenfunktion (235) die Angabe der Zeitverzögerung zu empfangen; und

ein erstes Paketverzögerungsbudget des TSC-QoS-Flusses in einem Kernnetz zu bestimmen, wobei das erste Paketverzögerungsbudget gleich einer Summe der ersten Aufenthaltsdauer, der zweiten Aufenthaltsdauer des TSC-QoS-Flusses in der Benutzerebenenfunktion (235) und der Ausbreitungsverzögerung zwischen einer Basisstation (225) und der Benutzerebenenfunktion (235) ist.

2. Das System nach Anspruch 1, wobei die erste Aufenthaltsdauer auf der Grundlage von mindestens einem der folgenden Faktoren bestimmt wird:

einer Hardware-Verarbeitungsrate des NW-TT,

einer Puffergröße des NW-TT,

einem QoS-Profil des TSC-QoS-Flusses, und

einer Anzahl von TSC-QoS-Flüssen in einer TSN-Verkehrsklasse über einen Port des NW-TT, wobei die TSN-Verkehrsklasse und der Port mit dem TSC-QoS-Fluss assoziiert sind.

3. Das System nach Anspruch 1, wobei die Benutzerebenenfunktion (235) veranlasst wird, die erste Aufenthaltsdauer zu bestimmen durch:

Empfangen einer Anfrage nach der ersten Aufenthaltsdauer von der Sitzungsverwaltungsfunktion (265), wobei die Anfrage ein QoS-Profil des TSC-QoS-Flusses und einen Port des NW-TT, der mit dem TSC-QoS-Fluss assoziiert ist, angibt;
als Reaktion auf den Empfang der Anfrage, Bestimmen einer TSN-Verkehrsklasse, die mit dem TSC-QoS-Fluss assoziiert ist, aus dem QoS-Profil; und
Bestimmen der ersten Aufenthaltsdauer auf der Grundlage der TSN-Verkehrsklasse, des Ports und des QoS-Profils.

4. Das System nach Anspruch 3, wobei
die Anfrage von der Sitzungsverwaltungsfunktion (265) während eines Einrichtungsverfahrens oder eines Freigabeverfahrens für den TSC-QoS-Fluss empfangen wird.

5. Das System nach Anspruch 1, wobei die Sitzungsverwaltungsfunktion (265) ferner veranlasst wird:

ein zweites Paketverzögerungsbudget des TSC-QoS-Flusses in einem Zugangsnetz zu bestimmen, indem das erste Paketverzögerungsbudget von einem Referenz-Paketverzögerungsbudget für den TSC-QoS-Fluss subtrahiert wird; und
das zweite Paketverzögerungsbudget an die Basisstation (225) zu senden.

6. Das System nach Anspruch 5, wobei die Sitzungsverwaltungsfunktion (265) ferner veranlasst wird:
eine Angabe des Referenz-Paketverzögerungsbudgets von einer Richtliniensteuerfunktion zu empfangen.

7. Das System nach Anspruch 1, wobei die Zeitverzögerung gleich einer Länge einer Summe der ersten und der zweiten Aufenthaltsdauer ist.

8. Die Sitzungsverwaltungsfunktion (265) nach Anspruch 1, wobei die Sitzungsverwaltungsfunktion (265) ferner veranlasst wird:
eine Anfrage nach der ersten Aufenthaltsdauer an die Benutzerebenenfunktion (235) zu senden, wobei die Anfrage ein QoS-Profil des TSC-QoS-Flusses und einen Port des NW-TT, der mit dem TSC-QoS-Fluss assoziiert ist, angibt, wobei das QoS-Profil eine TSN-Verkehrsklasse angibt, die mit dem TSC-QoS-Fluss assoziiert ist.

9. Das System nach Anspruch 8, wobei die Sitzungsverwaltungsfunktion (265) ferner veranlasst wird:
eine Angabe des Ports von einer Richtliniensteuerfunktion zu empfangen.

10. Das System nach Anspruch 8, wobei
die Anfrage während eines Einrichtungsverfahrens oder eines Freigabeverfahrens für den TSC-QoS-Fluss an die Benutzerebenenfunktion (235) gesendet wird.

11. Das System nach Anspruch 1, wobei die Sitzungsverwaltungsfunktion (265) ferner veranlasst wird:
einen TSC-Kontext für den TSC-QoS-Fluss zu erstellen oder zu aktualisieren.

12. Ein Verfahren, umfassend:

Bestimmen, durch eine Benutzerebenenfunktion (235), einer ersten Aufenthaltsdauer eines zeitkritischen Kommunikations-, TSC-, Quality-of-Service-, QoS-, Flusses in einem netzseitigen zeitkritischen Netzwerk-, TSN-, Übersetzer, NW-TT;
Bestimmen, durch die Benutzerebenenfunktion, einer zweiten Aufenthaltsdauer des TSC-QoS-Flusses in der Benutzerebenenfunktion (235);
Bestimmen, durch die Benutzerebenenfunktion, einer Zeitverzögerung, die zumindest teilweise auf der ersten Aufenthaltsdauer und zumindest teilweise auf der zweiten Aufenthaltsdauer basiert, wobei die Zeitverzögerung gleich einer Länge einer Summe der ersten Aufenthaltsdauer und der zweiten Aufenthaltsdauer ist;
Senden, durch die Benutzerebenenfunktion, einer Angabe der Zeitverzögerung an eine Sitzungsverwaltungsfunktion (265);

Empfangen, durch eine Sitzungsverwaltungsfunktion (265), von der Benutzerebenenfunktion (235), der Angabe der Zeitverzögerung; und

Bestimmen, durch die Sitzungsverwaltungsfunktion, eines ersten Paketverzögerungsbudgets des TSC-QoS-Flusses in einem Kernnetz, wobei das erste Paketverzögerungsbudget gleich einer Summe der ersten Aufenthaltsdauer, der zweiten Aufenthaltsdauer des TSC-QoS-Flusses in der Benutzerebenenfunktion (235) und der Ausbreitungsverzögerung zwischen einer Basisstation (225) und der Benutzerebenenfunktion (235) ist.

**Revendications**

1. Un système comprenant :
   une fonction de plan utilisateur (235), comprenant :

   au moins un processeur (910) ; et
   au moins une mémoire (920) incluant un code de programme informatique (940) ;
   la au moins une mémoire (920) et le code de programme informatique (940) étant configurés pour, avec le au moins un processeur (910), amener la fonction de plan utilisateur (235) à :

   déterminer un premier temps de résidence d'un flux de qualité de service, QoS, de communication sensible au temps, TSC, dans un traducteur TSN côté réseau, NW-TT, de réseau de télécommunications sensible au temps, TSN ;
   déterminer un deuxième temps de résidence du flux de QoS TSC dans la fonction de plan utilisateur (235) ;
   déterminer un délai de temps basé au moins en partie sur le premier temps de résidence et basé au moins en partie sur le deuxième temps de résidence, le délai de temps étant égal à une durée d'une somme du premier temps de résidence et du deuxième temps de résidence ; et
   envoyer une indication du délai de temps à une fonction de gestion de session (265) ; et
   une fonction de gestion de session (265), comprenant :

   au moins un processeur (910) ; et
   au moins une mémoire (920) incluant un code de programme informatique (940) ;
   la au moins une mémoire (920) et le code de programme informatique (940) étant configurés pour, avec le au moins un processeur (910), amener la fonction de gestion de session (265) à :

   recevoir, depuis la fonction de plan utilisateur (235), l'indication du délai de temps ; et
   déterminer un premier budget de délai de paquet du flux de QoS TSC dans un réseau central, le premier budget de délai de paquet étant égal à une somme du premier temps de résidence, du deuxième temps de résidence du flux de QoS TSC dans la fonction de plan utilisateur (235) et du délai de propagation entre une station de base (225) et la fonction de plan utilisateur (235).

2. Le système de la revendication 1, dans lequel le premier temps de résidence est déterminé sur la base d'au moins un parmi :

   un débit de traitement matériel du NW-TT,
   une taille de tampon du NW-TT,
   un profil de QoS du flux de QoS TSC, et
   un nombre de flux de QoS TSC dans une classe de trafic TSN via un port du NW-TT, la classe de trafic TSN et le port étant associés au flux de QoS TSC.

3. Le système de la revendication 1, dans lequel la fonction de plan utilisateur (235) est amenée à déterminer le premier temps de résidence par :

   la réception d'une demande de premier temps de résidence depuis la fonction de gestion de session (265), la demande indiquant un profil de QoS du flux de QoS TSC et un port du NW-TT associé au flux de QoS TSC ;
   en réponse à la réception de la demande, la détermination d'une classe de trafic TSN associée au flux de QoS TSC à partir du profil de QoS ; et
   la détermination du premier temps de résidence sur la base de la classe de trafic TSN, du port et du profil de QoS.

**4.** Le système de la revendication 3, dans lequel
la demande est reçue depuis la fonction de gestion de session (265) au cours d'une procédure d'établissement ou d'une procédure de libération pour le flux de QoS TSC.

**5.** Le système de la revendication 1, dans lequel la fonction de gestion de session (265) est en outre amenée à :

déterminer un deuxième budget de délai de paquet du flux de QoS TSC dans un réseau d'accès en soustrayant le premier budget de délai de paquet d'un budget de délai de paquet de référence pour le flux de QoS TSC ; et envoyer le deuxième budget de délai de paquet vers la station de base (225).

**6.** Le système de la revendication 5, dans lequel la fonction de gestion de session (265) est en outre amenée à :
recevoir une indication du budget de délai de paquet de référence depuis une fonction de contrôle de politique.

**7.** Le système de la revendication 1, dans lequel le délai de temps est égal à une durée d'une somme du premier et du deuxième temps de résidence.

**8.** La fonction de gestion de session (265) de la revendication 1, dans laquelle la fonction de gestion de session (265) est en outre amenée à :
envoyer une demande de premier temps de résidence à la fonction de plan utilisateur (235), la demande indiquant un profil de QoS du flux de QoS TSC et un port du NW-TT associé au flux de QoS TSC, le profil de QoS indiquant une classe de trafic TSN associée au flux de QoS TSC.

**9.** Le système de la revendication 8, dans lequel la fonction de gestion de session (265) est en outre amenée à :
recevoir une indication du port depuis une fonction de contrôle de politique.

**10.** Le système de la revendication 8, dans lequel
la demande est envoyée à la fonction de plan utilisateur (235) au cours d'une procédure d'établissement ou d'une procédure de libération pour le flux de QoS TSC.

**11.** Le système de la revendication 1, dans lequel la fonction de gestion de session (265) est en outre amenée à :
créer ou mettre à jour un contexte TSC pour le flux de QoS TSC.

**12.** Un procédé comprenant :

la détermination, par une fonction de plan utilisateur (235), d'un premier temps de résidence d'un flux de qualité de service, QoS, de communication sensible au temps, TSC, dans un traducteur TSN côté réseau, NW-TT, de réseau de télécommunications sensible au temps, TSN ;
la détermination, par la fonction de plan utilisateur, d'un deuxième temps de résidence du flux de QoS TSC dans la fonction de plan utilisateur (235) ;
la détermination, par la fonction de plan utilisateur, d'un délai de temps basé au moins en partie sur le premier temps de résidence et basé au moins en partie sur le deuxième temps de résidence, le délai de temps étant égal à une durée d'une somme du premier temps de résidence et du deuxième temps de résidence ;
l'envoi, par la fonction de plan utilisateur, d'une indication du délai de temps à une fonction de gestion de session (265) ;
la réception, par une fonction de gestion de session (265), depuis la fonction de plan utilisateur (235), de l'indication du délai de temps ; et
la détermination, par la fonction de gestion de session, d'un premier budget de délai de paquet du flux de QoS TSC dans un réseau central, le premier budget de délai de paquet étant égal à une somme du premier temps de résidence, du deuxième temps de résidence du flux de QoS TSC dans la fonction de plan utilisateur (235) et du délai de propagation entre une station de base (225) et la fonction de plan utilisateur (235).

FIG. 1

FIG. 2

FIG. 3

FIG. 4

FIG. 5

600 —

┌─────────────────────────────────────────┐ ⌐605
│ DETERMINE FIRST RESIDENCE TIME OF A TSN  │
│ QOS FLOW IN NW-TT                        │
└─────────────────────────────────────────┘
                    │
┌─────────────────────────────────────────┐ ⌐610
│ DETERMINE TIME DELAY AT LEAST IN PART    │
│ BASED ON THE FIRST RESIDENCE TIME        │
└─────────────────────────────────────────┘
                    │
┌─────────────────────────────────────────┐ ⌐615
│ SEND AN INDICATION OF THE TIME DELAY TO  │
│ SMF                                      │
└─────────────────────────────────────────┘

FIG. 6

700 —

┌─────────────────────────────────────────┐ ⌐705
│ RECEIVE FROM UPF AN INDICATION OF TIME   │
│ DELAY DETERMINED AT LEAST IN PART BASED  │
│ ON FIRST RESIDENCE TIME OF A TSN QOS FLOW│
│ IN NW-TT                                 │
└─────────────────────────────────────────┘
                    │
┌─────────────────────────────────────────┐ ⌐710
│ DETERMINE FIRST PDB OF THE TSN QOS FLOW IN│
│ A CORE NETWORK, THE FIRST PDB BEING EQUAL │
│ TO A SUM OF THE FIRST RESIDENCE TIME,     │
│ SECOND RESIDENCE TIME OF THE TSN QOS      │
│ FLOW IN UPF AND PROPAGATION DELAY         │
│ BETWEEN BS AND UPF                        │
└─────────────────────────────────────────┘

FIG. 7

800

```
┌─────────────────────────────────────┐ 805
│ SEND A REQUEST FOR ACCUMULATED      │
│ RESIDENCE TIME OF A TSN QOS FLOW IN │
│ BOTH NW-TT AND UPF                  │
└─────────────────────────────────────┘
                │
                ▼
┌─────────────────────────────────────┐ 810
│ RECEIVE AN INDICATION OF THE        │
│ ACCUMULATED RESIDENCE TIME FROM UPF │
└─────────────────────────────────────┘
                │
                ▼
┌─────────────────────────────────────┐ 815
│ CALCULATE SECOND PDB OF THE TSN QOS │
│ FLOW IN AN                          │
└─────────────────────────────────────┘
                │
                ▼
┌─────────────────────────────────────┐ 820
│ FORWARD THE SECOND PDB TO GNB VIA AMF│
└─────────────────────────────────────┘
                │
                ▼
┌─────────────────────────────────────┐ 825
│ CREATE OR UPDATE TSC CONTEXT FOR THE │
│ TSN QOS FLOW                        │
└─────────────────────────────────────┘
                │
                ▼
┌─────────────────────────────────────┐ 830
│ RECEIVE AN INDICATION OF THE UPDATED │
│ ACCUMULATED RESIDENCE TIME FROM UPF  │
└─────────────────────────────────────┘
```

FIG. 8

900

```
┌──────────────────────────────────────────┐
│  ┌──────────────┐     ┌──────────────┐   │
│  │COMMUNICATION │     │  PROCESSOR   │   │
│  │   MODULE 930 │─────│     910      │   │
│  └──────────────┘     └──────────────┘   │
│                            │             │
│                       ┌──────────────┐   │
│                       │ MEMORY 920   │   │
│                       │ ┌──────────┐ │   │
│                       │ │ PROG 940 │ │   │
│                       │ └──────────┘ │   │
│                       └──────────────┘   │
└──────────────────────────────────────────┘
```

FIG. 9

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ERICSSON**. TSCAI arrival time analysis. *3GPP DRAFT*, S2-1904935
- **HUAWEI et al.** Updates on Solution #18. *3GPP DRAFT*, S2-1812232
- **NOKIA et al.** Introducing support for UE and UPF Residence Time for TSC Deterministic QoS. *3GPP DRAFT*, S2-1906753
- **HUAWEI et al.** Mapping 5GS Bridge Delay to delays of TSN. *3GPP TS 23.501*